# EUROPEAN PATENT SPECIFICATION

(11) **EP 4 273 571 B1**
(45) Date of publication and mention of the grant of the patent: **15.07.2026**
(21) Application number: 22171575.8
(22) Date of filing: 04.05.2022
(51) Int. Cl.: G01S 5/02, G01S 19/20

(54) **PROCESSING OF TIMING, POSITION AND/OR FREQUENCY DATA**
VERARBEITUNG VON ZEIT-, POSITIONS- UND/ODER FREQUENZDATEN
TRAITEMENT DES DONNÉES DE TEMPS, DE POSITION ET/OU DE FRÉQUENCE

(43) Date of publication of application: 08.11.2023
(73) Proprietor: Nokia Technologies Oy, 02610 Espoo (FI)
(72) Inventor: HVIID, Jan Torst, Klarup (DK); JACOBSEN, Thomas Haaning, Nørresundby (DK); ANDRÉS MALDONADO, Pilar, Aalborg (DK); ABREU, Renato Barbosa, Aalborg (DK); KESHAVAMURTHY, Prajwal, Munich (DE); KOLDING, Troels Emil, Klarup (DK)
(74) Representative: Richardt Patentanwälte PartG mbB

(56) References cited:
- US-A1- 2017 070 971
- US-A1- 2022 018 681
- MEURER ET AL: "Resilient PNT for Safety-Critical Applications ? Toughen and Augment!", GNSS 2016 - PROCEEDINGS OF THE 29TH INTERNATIONAL TECHNICAL MEETING OF THE SATELLITE DIVISION OF THE INSTITUTE OF NAVIGATION (ION GNSS+ 2016), THE INSTITUTE OF NAVIGATION, 8551 RIXLEW LANE SUITE 360 MANASSAS, VA 20109, USA, 16 September 2016 (2016-09-16), pages 974 - 987, XP056013905
- RALF ZIEBOLD ET AL: "Concept for an integrated PNT-unit for maritime applications", SATELLITE NAVIGATION TECHNOLOGIES AND EUROPEAN WORKSHOP ON GNSS SIGNALS AND SIGNAL PROCESSING (NAVITEC), 2010 5TH ESA WORKSHOP ON, IEEE, 8 December 2010 (2010-12-08), pages 1 - 8, XP031898930, ISBN: 978-1-4244-8740-0, DOI: 10.1109/NAVITEC.2010.5708061

## Description

### Field

The present specification relates to devices and systems for processing one or more of timing, positioning and frequency data. For example, the specification describes devices and system for processing positioning, navigation and timing (PNT) devices and system.

### Background

Devices (such as user devices) and systems for processing positioning, navigation and timing data are known in the art. There remains a need for further development in this field. US 2022/018681 A1 discloses a fault detection, containment, isolation, and response architecture for a position, navigation, and timing (pnt) system. US 2017/070971 A1 discloses methods and systems for collaborative global navigation satellite system (gnss) diagnostics.

### Summary

The invention is defined in the independent claims. Advantageous embodiments are set out in the dependent claims.

Technical features of the invention are described in the appended claims. In a first aspect, this specification provides an apparatus comprising means for performing: receiving data from each of a plurality of sources, wherein said data includes one or more of timing, positioning and frequency data; comparing data of corresponding data types received from different sources of the plurality and determining whether the compared data are the same to within an allowed tolerance and, if not, identifying faulty data; initiating an error handling process in the event that faulty data is identified; and updating a local reference (e.g. a local clock) in the event that non-faulty data is identified; and using the local reference to identify data that is likely to be correct and data that is likely to be faulty in the event that faulty data is identified. The said tolerance may be system data and may be provided at an input of the apparatus.

In some example embodiments, each of the plurality of sources is a positioning, navigation and timing (PNT) component.

At least one of the plurality of sources may be a 5G positioning system. Alternatively, or in addition, at least one of the plurality of sources may be a satellite communication system or a low earth orbit satellite communication system. Alternatively, or in addition, at least one of the plurality of sources may comprise one or more of GNSS, GPS, GLONASS, Galileo, BeiDou or similar systems.

The means for comparing data of corresponding data types may comprise means for performing: comparing position estimates from said difference sources of the plurality. Alternatively, or in addition, the means for comparing data of corresponding data types may comprise means for performing: comparing timing estimates from said difference sources of the plurality. Alternatively, or in addition, the means for comparing data of corresponding data types may comprise means for performing: normalising frequency estimates from said difference sources of the plurality and comparing the normalised frequency estimates.

Some example embodiments further comprise means for performing: using the local reference to identify data that is likely to be correct and data that is likely to be faulty in the event that faulty data is identified. The identified correct data may be used as an output (e.g. a positioning output). Some example embodiments further comprise means for performing: initiating a reset of the source of the identified faulty data and/or suppressing data (e.g. all data) from the source of the identified faulty data.

Some example embodiments further comprise means for performing: generating output data (e.g. a position estimate) based on a combination of corresponding data from sources of data for which no faulty data has been identified.

The data received from each of the plurality of sources may be received at a user equipment of a mobile communication system.

The said means may comprise: at least one processor; and at least one memory including computer program code, the at least one memory and computer program code configured to, with the at least one processor, cause the performance of the apparatus.

In a second aspect, this specification provides a method comprising: receiving data from each of a plurality of sources (e.g. positioning, navigation and timing (PNT) components), wherein said data includes one or more of timing, positioning and frequency data; comparing data of corresponding data types received from different sources of the plurality and determining whether the compared data are the same to within an allowed tolerance and, if not, identifying faulty data; initiating an error handling process in the event that faulty data is identified; and updating a local reference (e.g. a local clock) in the event that non-faulty data is identified and using the local reference to identify data that is likely to be correct and data that is likely to be faulty in the event that faulty data is identified. The said tolerance may be system data and may be provided at an input of the apparatus. The data received from each of the plurality of sources may be received at a user equipment of a mobile communication system.

Comparing data of corresponding data types may comprise one or more of: comparing position estimates from said difference sources of the plurality; comparing timing estimates from said difference sources of the plurality; and normalising frequency estimates from said difference sources of the plurality and comparing the normalised frequency estimates.

At least one of the plurality of sources may be a 5G positioning system. Alternatively, or in addition, at least one of the plurality of sources may be a satellite communication system. Alternatively, or in addition, at least one of the plurality of sources may comprise one or more of GNSS, GPS, GLONASS, Galileo, BeiDou or similar systems.

For example, identified correct data may be obtained by performing the operation of using the local reference to identify data that is likely to be correct and data that is likely to be faulty in the event that faulty data is identified. The identified correct data may be used as an output (e.g. a positioning output). Some example embodiments further comprise: initiating a reset of the source of the identified faulty data and/or suppressing data (e.g. all data) from the source of the identified faulty data.

Some example embodiments further comprise: generating output data (e.g. a position estimate) based on a combination of corresponding data from sources of data for which no faulty data has been identified.

In a third aspect, this specification describes computer-readable instructions which, when executed by a computing apparatus, cause the computing apparatus to perform (at least) any method as described with reference to the second aspect.

In a fourth aspect, this specification describes a computer-readable medium (such as a non-transitory computer-readable medium) comprising program instructions stored thereon for performing (at least) any method as described with reference to the second aspect.

In a fifth aspect, this specification describes an apparatus comprising: at least one processor; and at least one memory including computer program code which, when executed by the at least one processor, causes the apparatus to perform (at least) any method as described with reference to the second aspect.

In a sixth aspect, this specification describes a computer program comprising instructions for causing an apparatus to perform at least the following: receive data from each of a plurality of sources, wherein said data includes one or more of timing, positioning and frequency data; compare data of corresponding data types received from different sources of the plurality and determine whether the compared data are the same to within an allowed tolerance and, if not, identifying faulty data; initiate an error handling process in the event that faulty data is identified; and update a local reference in the event that non-faulty data is identified.

In a seventh aspect, this specification describes an input (or some other means) for receiving data from each of a plurality of sources (e.g. positioning, navigation and timing components), wherein said data includes one or more of timing, positioning and frequency data; a data processor (or some other means) for comparing data of corresponding data types received from different sources of the plurality and determining whether the compared data are the same to within an allowed tolerance and, if not, identifying faulty data; error handler module (or some other means) for initiating an error handling process in the event that faulty data is identified; and processor (or some other means) for updating a local reference (e.g. a local clock) in the event that non-faulty data is identified.

### Brief description of the drawings

Example embodiments will now be described, by way of example only, with reference to the following schematic drawings, in which:
FIGS. 1 to 3 are block diagram of systems in accordance with example embodiments;
FIG. 4 is a flow chart showing an algorithm in accordance with an example embodiment;
FIG. 5 shows a system in accordance with an example embodiment;
FIG. 6 is a flow chart showing an algorithm in accordance with an example embodiment;
FIG. 7 is a block diagram of a system in accordance with an example embodiment;
FIGS. 8 and 9 are flow charts showing algorithms in accordance with example embodiments;
FIGS. 10 and 11 are plots showing position estimates in accordance with example embodiments;
FIG. 12 is a flow chart showing an algorithm in accordance with an example embodiment;
FIG. 13 is a block diagram of a system in accordance with an example embodiment;
FIG. 14 is a flow chart showing an algorithm in accordance with an example embodiment;
FIG. 15 is a block diagram of a system in accordance with an example embodiment;
FIG. 16 is a block diagram of components of a system in accordance with an example embodiment; and
FIG. 17 shows an example of tangible media for storing computer-readable code which when run by a computer may perform methods according to example embodiments described above.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

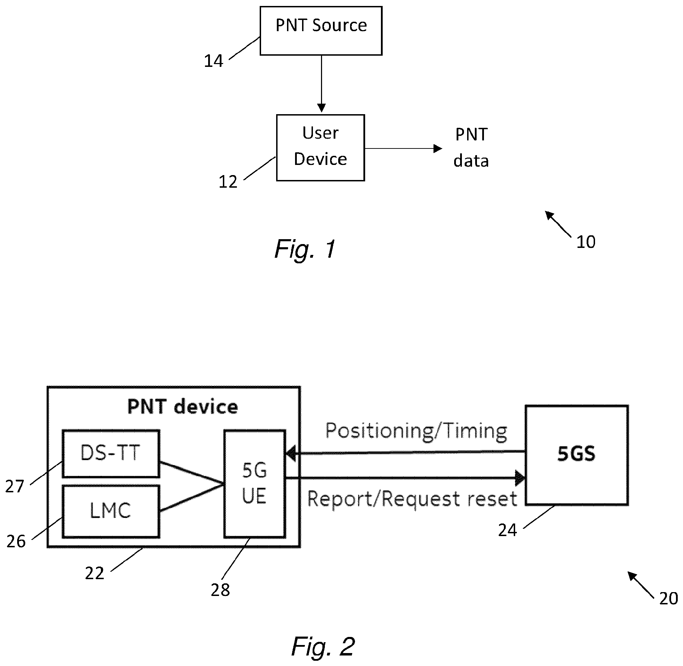

FIG. 1 is a block diagram of a system, indicated generally by the reference numeral 10, in accordance with an example embodiment. The system 10 comprises a user device (e.g. a UE) 12 and a source 14 of positioning, navigation and timing (PNT) data. As discussed in detail below, one example of PNT data is Global Navigation Satellite System (GNSS) data. The PNT source 14 provides PNT information to the user device 12. The user device 12 process the PNT information and outputs PNT data.

The system 10 is an example of a PNT system. The term "PNT system" may refer to the components, processes, and parameters that collectively produce a final PNT solution for a user. In the system 10, the user device 12 is being used as a "PNT UE", which may be defined as equipment that outputs PNT solution (e.g. PNT systems of systems, integrated PNT receivers, and PNT source components, such as Global Navigation Satellite System (GNSS) chipsets).

GNSS time delivery (such as Global Positioning System (GPS) data) is used in many sectors for positioning, navigation and timing (PNT). GNSS may experience a number of vulnerabilities due, for example, to environmental phenomena, malicious or incidental interference, spoofing, jamming, adjacent band interference, etc. As a response to such concerns, backup solutions are of interest. The availability of diverse, time-proven, robust fallbacks to GPS, GNSS or other PNT systems would be desirable.

The degree to which a PNT system is able to cope with failures in PNT sources can be referred to as a "resilience" of the PCT system. Table 1 below provides definitions of different levels resilience for PNT systems (as discussed, for example, in "Resilient Positioning, Navigation, and Timing (PNT) Conformance Framework v1.0", Department of Homeland Security (DHS) Science and Technology Directorate (S&T), available online: https://www.dhs.gov/publication/st-resilient-pnt-conformance-framework). Of course, the definitions provided in Table 1 are provided by way of example only - alternative definitions are possible.

**Table 1 - Example resilience levels definitions for PNT systems.**

| **Resilience Level** | **Description** |
|---|---|
| Level 0 | Non-resilient system or source |
| Level 1 | Ensures recoverability after removal of the threat. Enables: |
| | • Verified stored data |
| | • Support for full system recovery by manual means |
| | • Firmware can be reloaded or updated securely PNT level 1 includes manual recovery such that the user (e.g. person or a system) needs to initiate the recovery process. |
| Level 2 | Provides a solution during a threat. Includes the features of Level 1 and also enables: |
| | • Identification of a compromised PNT source. |
| | • Automatic recover of PNT sources and system without disruption of the PNT output. |
| | In PNT level 2, the user (person or a system, such as an operator) can typically force a manual recovery. |
| Level 3 | Provides a solution during a threat. Includes the features of Levels 1 and 2 and also enables: |
| | • PNT source corrupted data does not corrupt other PNT sources. |
| | • Cross-verification between PNT solutions from all PNT sources. |
| Level 4 | Provides a solution (without degradation) during a threat. Includes the features of Levels 1 to 3 and also enables: |
| | • Diversity of PNT source technology to mitigate common mode threats. |
| | • Multiple independent PNT sources are provided with fully integrated verification techniques. |

PNT resilience arises not just from the capabilities of individual component (such as holdover at the devices or a by a component having access to additional PNT sources), but also how they are used within a PNT compliant systems.

FIG. 2 is a block diagram of a system, indicated generally by the reference numeral 20, in accordance with an example embodiment. The system 20 comprises a PNT device 22 and 5G communication system (5GS) 24. In the system 20, the 5G communication system 24 is being used as a source of PNT data, such that the PNT device 22 is an example of the user device 12 described above and the 5G system 24 is an example of the PNT source 14 described above.

As shown in FIG. 2, the PNT device 22 includes a location management client (LMC) 26, a device-side time-sensitive network translator (DS-TT) 27 and a 5G user equipment (5G UE) 28. The 5G UE 28 is in communication with both the LMC 26 and the DS-TT 27.

The 5G UE 28 may be a consumer of time and/or positioning services offered by the 5GS 24. Moreover, as discussed in detail below, the 5G UE may have access to multiple PNT sources (e.g. the UE 28 may have a GNSS receiver, as well as to the LMC 26 and/or the DS-TT 27, which may be configured Precision Time Protocol (PTP) support for receiving time information via user plane packets).

A PNT system providing a defined resiliency level may be implemented using only the 5G UE 28 (if the UE satisfies the conditions of a PNT solution) or using the UE 28 together with the 5G system 24 (if the 5G system with the UE satisfies the relevant condition) for the desired resiliency level. For the latter case, the UE part of a PNT compliant 5GS may have at least the DS-TT 27 or the LMC 26 to enable the 5G core operation based on the Location Management Function (LMF) (responsible for positioning methods and assisted GNSS procedure) or Time Sensitive Communication and Time Synchronization Function (TSCTSF) (responsible for time synchronization service).

As discussed further below, the system 20 may be exploited to enable a 5G communication system to provide Level 2 PNT resilience.

In order for 5GS to claim resiliency level 2 based on the PNT framework outlined above with respect to Table 1, the system may be required to support some or all of the following functionality:
- Being capable of utilizing multiple PNT sources;
- Verifying the PNT resources (at least against each other); and
- Initiating a recovery procedure in case one of the PNT sources is unavailable or fails a verification process.

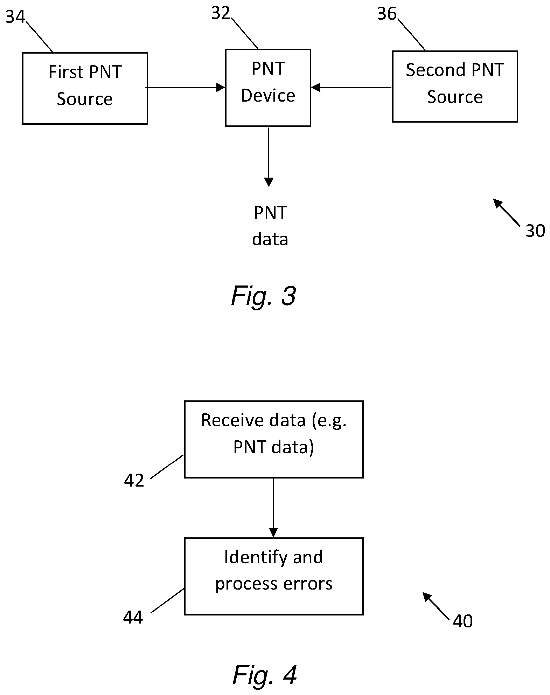

FIG. 3 is a block diagram of a system, indicated generally by the reference numeral 30, in accordance with an example embodiment. The system 30 comprises a PNT device 32 (such as the user device 12 or the 5G UE 28 described above). The system 30 further comprises a first PNT source 34 and a second PNT source 36 (each of which may be similar to the PNT source 14 described above). In the use of the system 30, the PNT device 32 receives and processes data from both the first PNT source 34 and the second PNT source 36. As indicated in the system 30, the PNT device 30 may output PNT data.

FIG. 4 is a flow chart showing an algorithm, indicated generally by the reference numeral 40, in accordance with an example embodiment. The algorithm 40 may be implemented by the system 30.

The algorithm 40 starts at operation 42, where data including one or more of timing, positioning and frequency data (e.g. PNT data) is received from each of a plurality of sources. For example, PNT data may be received at the PNT device 32 from at least the first PNT source 32 and the second PNT source 36.

At operation 44, the received data is compared in order to identify errors. For example, data of corresponding data types received from different sources may be compared in order to determine whether the compared data are the same to within an allowed tolerance; if not, faulty data is identified. As discussed in detail below, the data may be processed dependent on identified errors in order to provide PNT data. For example non-faulty data may be used as an output, with faulty data being suppressed.

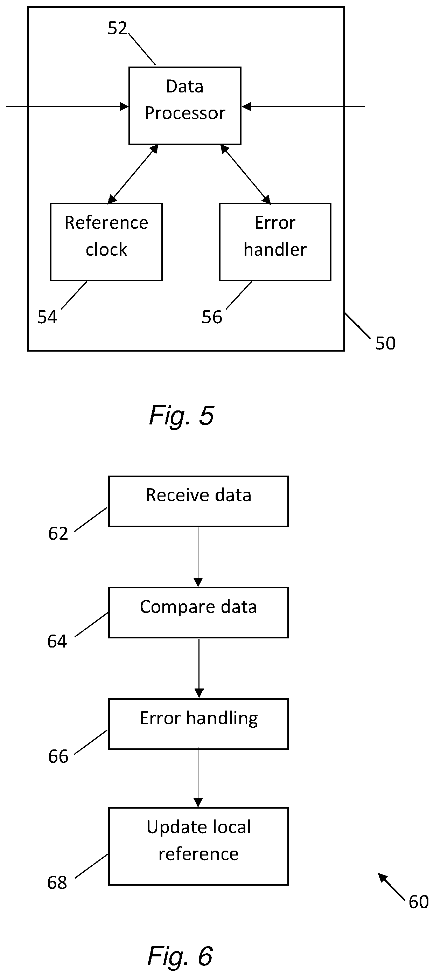

FIG. 5 shows a system 50 in accordance with an example embodiment. The system 50 comprises a data processor 52, a reference clock 54 and an error handler module 56. The data processor 52 has a first input for receiving data from a first source and a second input for receiving data from a second source. In the use of the system 50, the first and second sources of data may include one or more of timing, positioning and frequency data. Thus, the system 50 may be a PNT component configured to receive and processor PNT data from multiple sources (and is an example implementation of the PNT device 32 of the system 30 described above).

FIG. 6 is a flow chart showing an algorithm, indicated generally by the reference numeral 60, in accordance with an example embodiment. The algorithm 60 may be implemented using the system 50 described above.

The algorithm 60 starts at operation 62, where data is received (e.g. at the data processor 52) from multiple sources. The data may include one or more of timing, positioning and frequency data (e.g. PNT data). At least one of the plurality of sources of data received in the operation 62 may be a 5G positioning system (e.g. received from the 5GS 24 described above). The plurality of sources of data may include one or more of GNSS, GPS, GLONASS, Galileo, BeiDou or similar positioning systems.

At operation 64, the received data are compared. For example, the data processor 52 may compare data of corresponding data types received from different sources and determine whether the compared data are the same (e.g. to within an allowed tolerance). If corresponding data from different sources are not deemed to be the same, then faulty data may be identified. As discussed elsewhere in this document, the relevant tolerances may be system data and may be inputs to the system 50.

The comparison of data in the operation 64 may be implemented by comparing timing estimates of corresponding data from said difference data sources. Alternatively, or in addition, the comparison of data may be implemented by normalising frequency estimates of corresponding data from said different data sources and comparing the normalised frequency estimates.

At operation 66, an error handling process is initiated in the event that faulty data is identified in the operation 64. The error handling may be implemented by the error handler module 56. Error handling may include functions such as suppressing data identified as being faulty and/or resetting or restarting modules providing data identified as being faulty.

At operation 68, a local reference (e.g. the reference clock 54) may be updated in the event that no faulty data (or at least some non-faulty data) is identified. Of course, the operations 66 and 68 may be implemented in a different order, or in parallel.

Further details of example implementations of the algorithm 60 are provided below.

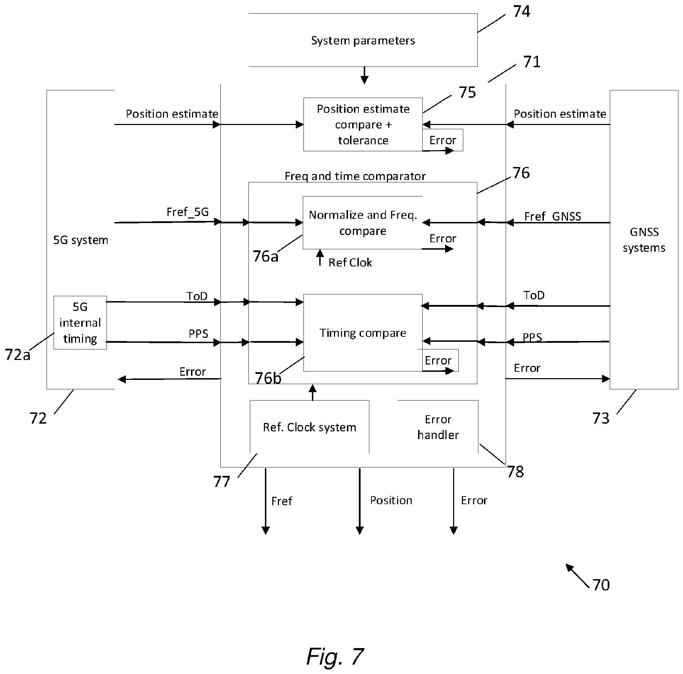

FIG. 7 is a block diagram of a system, indicated generally by the reference numeral 70, in accordance with an example embodiment. The system 70 is an example implementation of the system 30 described above and may be used to implement one or more of the algorithms 40 and 60 described above (and the algorithms described below).

The system 70 comprises a PNT device 71, a 5G system (5GS) 72 and one or more GNSS systems 73. The PNT device 71 receives system parameters from system parameters module 74.

The PNT device 71 is an example implementation of the PNT device 32 of the system 30 described above. Similarly, the 5G system 72 and the GNSS 73 are examples of the first PNT source 34 and the second PNT source 36 described above respectively. It should be noted that the 5GS 72 and the GNSS 73 are provided by way of example only. Other PNT systems could be implemented instead of, or in addition to, one or other of the 5GS 72 and the GNSS 73. Such alternatives include non-terrestrial networks such as OneWeb, Starlink and low earth orbit (LEO) constellations.

The PNT device 71 includes a position comparison module 75, a frequency and time comparison module 76, a reference clock system 77 and an error handler module 78. The reference clock system 77 and the error handler module 78 may be used to implement the reference clock 54 and error handler module 56 of the system 50 described above. Similarly, the position comparison module 75 and the frequency and time comparison module 76 may be implemented by the data processor 52 of the system 50.

The frequency and time comparison module 76 includes a frequency compare module 76a and a timing compare module 76b. The 5G system 72 includes 5G internal timing 72a that communicates with the timing compare module 76b as described further below.

The system parameters provided by the system parameters module 74 may provide limits, tolerances and compensation parameters, for example for the internal reference clock system 77 and the expected accuracy or tolerances for connected PNT sources. The parameters may, for example, be derived during a development process (e.g. based on component tolerances) or as a part of the factory calibration flow. The parameters for the internal reference clock system may be updated during use so that the accuracy of the reference clock can be improved over time, as discussed further below.

The position comparison module 75 may be used to compare position estimates provided by different PNT sources (e.g. the 5GS 72 and the GNNS systems 73 in the example system 70, but, as noted above, data may be received from other PNT sources in addition to, or instead of, one or more of the 5GS 72 and the GNSS systems 72). If the position estimates do not match within defined tolerances (which tolerances may be set by the system parameters module 74), there may also be a compare operation with an internal position estimate based on previous position estimation including an approximation based on speed of the device, etc. If a first source provides a position estimate that matches the internal position estimate and a second source provides a position estimate that does not match the internal position estimate, then the second source may be identified as being faulty.

The frequency and time comparison module 76 seeks to estimate the delta between the PNT source estimates for time and frequency. In the case of frequency an additional check against the internal clock may also be performed.

The error handler module 78 handles the triggered errors from the comparison modules described above. Based on an error indication, an error is sent regarding the failing PNT source. The error handler module 78 can, for example, initiate a reset of a relevant sub-system or force a suppression of, for example, an identified jamming signal. Alternatively, or in addition, the error handler module 78 may ensure that the PNT output (Fref, Position) is be generated from the best "non-failing" source or from an average of non-failing sources.

The reference clock system 77 may be free running clock system with the ability to obtain updates or corrections from the PNT sources. In this way, the internal clock system may be synchronised with the PNT clock sources, thereby increasing accuracy.

In some example embodiments, the system 70 provides a PNT compliant device to aid the 5GS to become PNT compliant to resilience level 2 (with access to two or more PNT sources). The additional PNT sources can be one or more of the GNSS systems and another 5G/LTE position system as shown in FIG. 7, although this is not essential to all example embodiments.

As described above, the system 70 enables the comparison/verification of multiple PNT sources and recovery if a PNT source fails to comply with resiliency level 2. Furthermore, the structure of the system 70 can be extended with more systems by applying same interface between the PNT device and the interfaced PNT system. The recovery from a PNT source failure may be automated (i.e. not requiring user intervention).

Example implementations of the system 70 include a number of features, as described further below.

All PNT sources (e.g. the 5GS 72 and the GNSS systems 73 in the example described above) are used as input and may be constantly evaluated. For example, even after an error has been discovered and sent to a failing PNT source, the apparently failing source may still be evaluated. This gives the option to run continuously having optimal performance and allow to have the most accurate position, time and frequency output.

Some or all of the comparators (the position comparison module 75, the frequency and time comparison module 76, the frequency compare module 76a and the timing compare module 76b) may implement two comparison operations:
- First, a direct comparison of between PNT sources (e.g. position, time or frequency) may be carried out. The evaluation of the accuracy of the PNT sources can be based on the PNT source inputs (plus the tolerances for the input sources). The values and tolerances are compared into account for the evaluation. The result is passed on the decision block.
- Second, a comparison between an individual PNT sources and an internal clock/timer may be carried out.

A determination of whether or not an error is identified (e.g. a pass/fail criteria) may depend on the circumstances. For example:
- Failing or missing position data may be indicative of a jammer blocking the relevant signal. This may be indicated by the error handler module 78 and the failing PNT source may, for example, be instructed to change an antenna configuration to NULL the jamming signal). In this case, the timing and frequency data may still be acceptable from the failing PNT source.
- Failing timing and frequency data may be caused by an error in the backbone of the system (e.g. a gNB reference time source drifting, a Doppler effect or non-line-of-sight (NLOS) connection). The error handler module 78 may indicate the issue to the failing PNT source for either re-scan of better gNBs or abandon usage of the relevant PNT sources until the problem is solved.

In some example embodiments, PNT sources may be checked and compared and a (non-failing) source, or an average from multiple (non-failing) sources, may be selected for generating PNT output data. This selection may be smoothed to avoid jumps (e.g. using averaging).

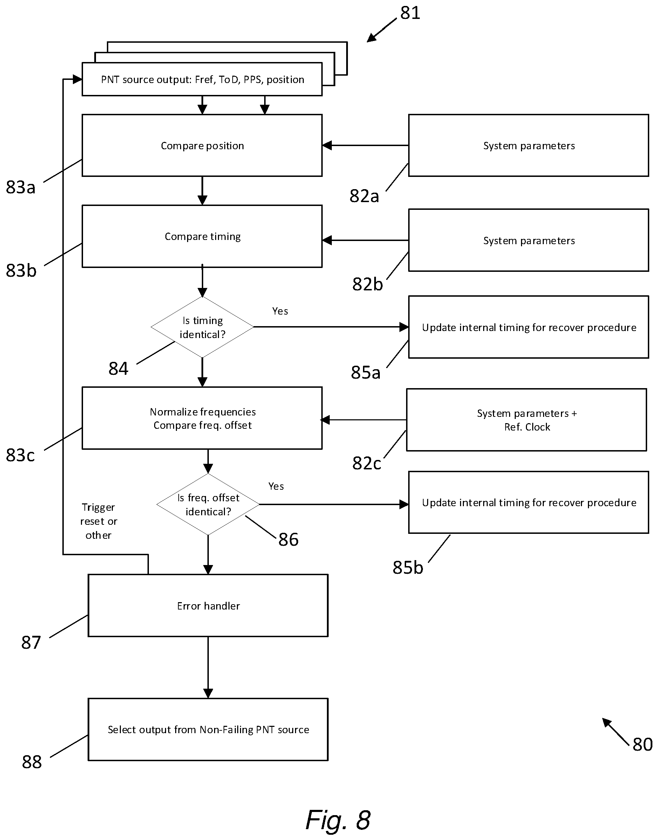

FIG. 8 is a flow chart showing an algorithm, indicated generally by the reference numeral 80, in accordance with an example embodiment. The algorithm 80 may be implemented using the system 70 described above.

In operation 81 of the algorithm 80, each of the PNT sources (e.g. the 5GS 72 and the one or more GNSS systems 73 of the system 70) provide reference frequency (Fref), time of departure (ToD), pulse-per-second (PPS) and position data to the detection algorithm.

The position estimates from all PNT sources are compared (in operation 83a) prior to calculating the position of the device with each PNT source separately. The position estimates from each source are compared (taking into account the expected tolerances for the individual sources, for example as provided by system parameters input 82a, such as the system parameters module 74 of the system 70). If the comparison results in a failure, an indication is raised in the error handler module (see operation 87 below).

As the comparator may have only two PNT sources for the comparison, other methods to identify a failing input of system may be provided. In a first method, a position prediction is made based on previous position estimates (that have passed the comparison process) and a speed of the device. In a second method, if both position estimates are within the predicted position estimate, the decision will be passed on to the frequency and time comparator (the module 76 in the system 70) to isolate the failing PNT source.

At operation 83b of the algorithm 80, time estimates from each source are compared. If a determination is made in operation 84 that the timing estimates are identical (or within the required tolerances for the individual sources; for example, as provided by system parameters input 82b, such as the system parameters module 74), then the internal reference clock system (e.g. the reference clock system 77) is updated accordingly in operation 85a (e.g. in order to achieve better time accuracy for better recovery in the event of failing sources).

At operation 83c, normalized frequency estimates from the PNT sources are compared. If a determination is made in operation 86 that the frequency estimates are identical (or within the tolerances for the individual sources; for example, as provided by system parameters input 82c, such as the system parameters module 74), the reference clock module is adjusted accordingly (in operation 85b). The adjustment value can be stored and mapped to the current temperature and be used for future usage if both system should fail it will be possible to maintain a quite stable frequency output.

In operation 87, the error handler module checks all the previous parameters for any failing steps (e.g. as a result of any of the position, timing and frequency comparisons discussed above). If any of the comparators indicate a failing PNT source, an error indication is sent to the failing PNT system. The error indication can trigger the PNT source to NULL the jamming signal source with the usage of antenna beam handling. If the error continues to occur, the system may be reset.

Different alternatives can be considered for notifying errors through the 5GS to a failing PNT source.

For a GNSS system, an LMC client at the relevant PNT device could trigger the notification to the LMF via LTE Positioning Protocol (LPP) messages. The LMF could interact with the relevant Gateway Mobile Location Centre (GMLC) that is the first node an external Location Service Client (LCS) client accesses in a PLMN. Then, the GMLC could notify the LCS to let the PNT consumer know there is an issue with GNSS.

For 5G-based PNT solutions (e.g. timing reference or positioning methods), the LMC client at the relevant PNT device could trigger the notification to the LMF via LPP messages. Depending on whether the issue is due to 5G clock drifting or the positioning methods are not working properly, the LMF may interact with the TSCTSF to handle the issue internally in the 5GS. The interaction between the PNT device can be as follows:
- Clock drift (Frequency error): The PNT device may indicate to the gNB that the frequency error is exceeding the expected frequency range. The gNB may then either switch to alternative reference clock (e.g. OCXO or some other high precision clock) or indicate to the LMF that the PNT device cannot be used for position estimates and other high precision references (timing and frequency);
- Timing drift: The PNT device may indicate to the gNB that the timing drift is beyond the expected limits. The gNB may then calculate the frame structure based on some other high precision timing reference;
- Position estimation error: The PNT device may signal to the LMF that the estimate is beyond the expected tolerances. The LMF may then evaluate the estimates used for the position calculation for errors. This could be timing estimates provided by neighbour gNB or other issues;
- For vertical clock issue (not full PNT solution, only time domain): The DS-TT could be configured to send Port Management Information Container (PMIC) to the TSCTSF (via NAS signalling) to notify the event at the TSCTSF (reusing Rel-16/17 procedure). The TSCTSF later could report this event to an external third party responsible of the failing vertical clock.

In the operation 88, in the event of a failing PNT source, the overall PNT system may continue without the failing service and use the best non-failing system as master reference (or combine the outputs of multiple non-failing systems, if available).

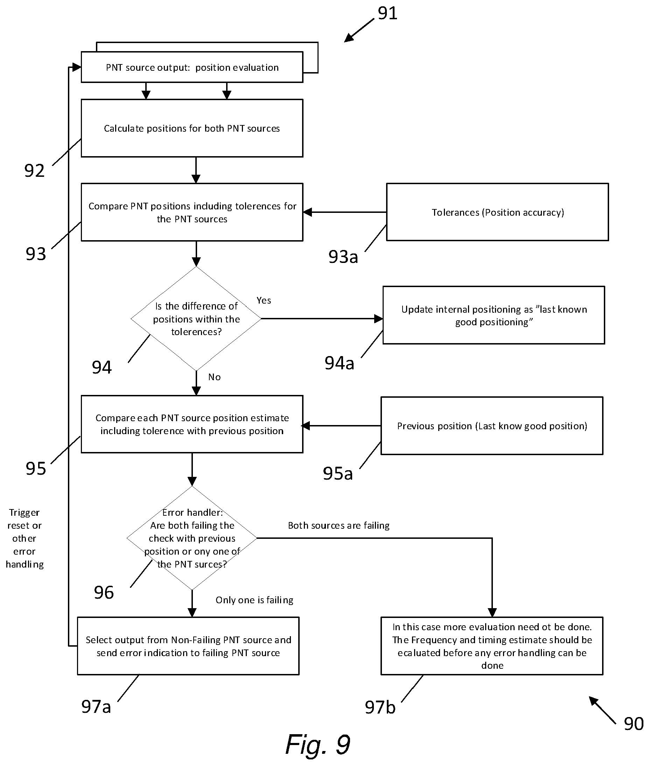

FIG. 9 is a flow chart showing an algorithm, indicated generally by the reference numeral 90, in accordance with an example embodiment. The algorithm 90 provides further information of an example algorithm for comparing position estimates from two different PNT sources. Of course, the algorithm could readily be extended to compare data from more than two PNT sources.

The algorithm 90 starts at operation 91, where PNT data for position evaluation are obtained from the two relevant PNT sources. At operation 92, a position estimate is generated based on the data from each PNT source. As there can be a time difference in the time of the position estimates from the PNT sources, some data handling may be needed. This could, for example, compensate for speed and thereby recalculate the position.

At operation 93, the position estimates from each source are compared, taking into account the expected tolerances for the individual sources (e.g. as provided by system parameters input 93a, such as the system parameters module 74 of the system 70).

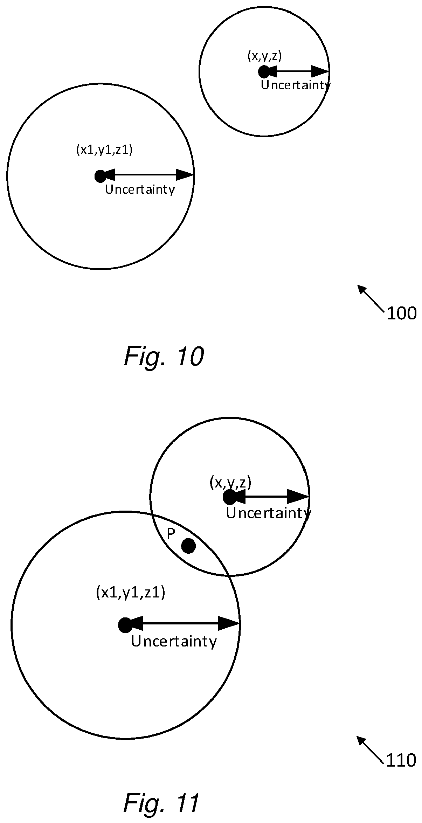

FIG. 10 is a plot, indicated generally by the reference numeral 100, showing position estimates in accordance with an example embodiment. Two position estimates are shown in the plot 100. The first has a centre point (x, y, z). The second has a centre point (x1, y1, z1). The allowed tolerances for the position estimates are shown as circles around the centre point of the position estimates.

Based on the data shown in the plot 100, the comparisons in operation 93 of the algorithm 90 would fail, since the distance between the first and second position estimates exceeds the relevant thresholds. This is apparent since there is no common position for both position estimates that is with the position uncertainty expressed by the threshold.

FIG. 11 is a plot, indicated generally by the reference numeral 110, showing position estimates in accordance with an example embodiment. Two position estimates are shown in the plot 110. The first has a centre point (x, y, z). The second has a centre point (x1, y1, z1). As with the plot 100, the allowed tolerances on the position estimates are shown as circles around the centre point of the position estimates.

Based on the data shown in the plot 110, the comparisons in operation 93 of the algorithm 90 would pass, since the distance between the first and second position estimates is within the relevant thresholds. This is apparent since the position uncertainty expressed by the threshold circles (which express the position estimate uncertainty) overlap.

It should be noted that the thresholds may be different for the first and second position estimates. An example could be that a GNSS position estimate is provided with a relatively high accuracy (e.g. of within 2 metres) and a 5G position is provided with a relatively low accuracy (e.g. of within 10 metres). Thus, the tolerance circles would have different dimensions and, in effect, the position comparison check in operation 93 would pass if the first and second position estimates were within 12 metres of each other.

In operation 94 of the algorithm 90, a determination is made regarding whether differences in the position estimates are within the relevant tolerances. If so, then the calculated position estimate is saved and the "last known good position" is updated with that position estimate in operation 94a. The saved position may be the middle of the overlapping area of the circles of the plot 110 (i.e. the position P).

If the check in operation 94 fails, each of the position estimates is compared (in operation 95) with the previous known good position (as received from module 95a), possibly taking into account estimates of the speed and direction that the device has moved since that last known good position.

In operation 96, a determination is made regarding whether one or both position checks has failed (i.e. whether either or both of the PNT sources is deemed to be failing). The operation 96 may be implemented by comparing the calculated position estimates with the last known good position (see operation 94a above). If only one check has failed, the algorithm 90 moves to operation 97a, where the source that passes (i.e. matches the modified last known good position, for example to within a tolerance) will be used as a reference and the failing source will be marked as failed and an error indication will be sent to the device.

If both PNT sources are deemed to be failing, then the algorithm 90 moves to operation 97b, where a further position check evaluation is implemented. For example, the frequency and timing estimates may be evaluated to confirm whether both PNT sources really are failing.

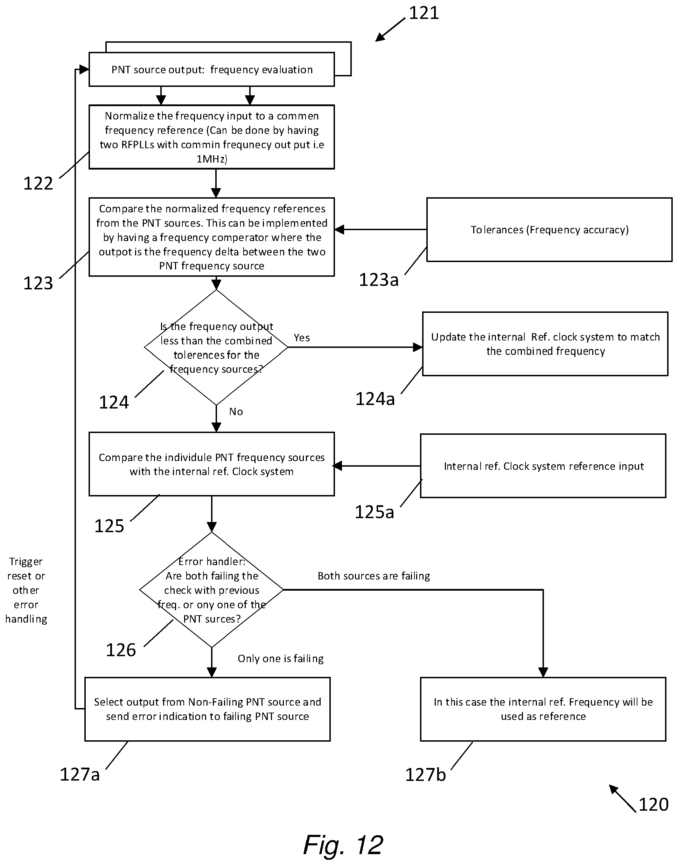

FIG. 12 is a flow chart showing an algorithm, indicated generally by the reference numeral 120, in accordance with an example embodiment. The algorithm 120 provides further information of an example algorithm for comparing frequency estimates from two different PNT sources. Of course, the algorithm could readily be extended to compare data from more than two PNT sources.

The algorithm 120 starts at operation 121, where two PNT sources for frequency evaluation are obtained.

At operation 122, the input frequencies from the PNT sources are normalised, if necessary. This may be necessary, for example, if the input frequencies from the PNT sources are not at same frequency. As discussed further below, the operation 122 may be implemented using a phase locked loop (PLL) for each PNT frequency source and having the same common frequency to enable a comparison. As an example, the common frequency could be 1MHz.

At operation 123, the position estimates from each source are compared within the expected tolerances for the individual sources (e.g. as provided by system parameters input 123a, such as the system parameters module 74 of the system 70).

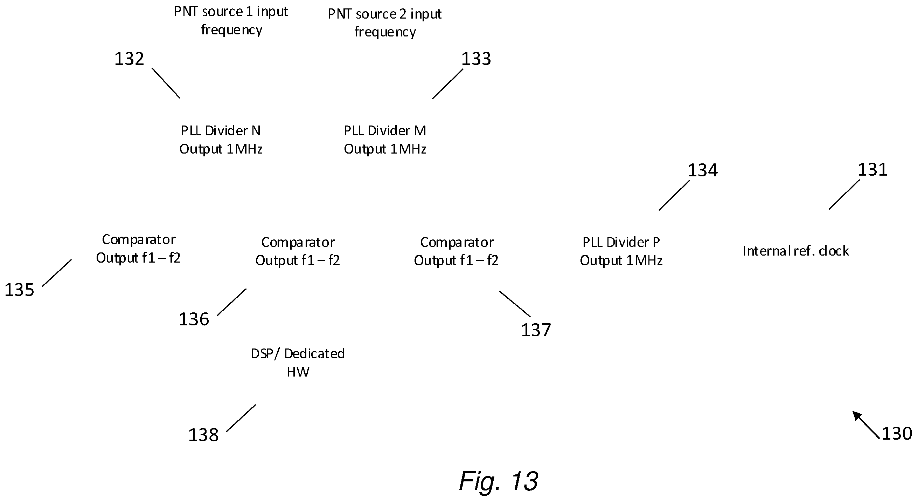

FIG. 13 is a block diagram of a system, indicated generally by the reference numeral 130, in accordance with an example embodiment. The system 130 may be used to implement aspects of the algorithm 120, including the normalisation of operations 122 and 123, as discussed further below.

The system 130 comprises an internal reference clock 131 and receives the first and second PNT signals for which frequency comparisons are required. The system further comprises a first PLL frequency divider 132, a second PLL frequency divider 133, a third PLL frequency divider 134, a first frequency comparator 135, a second frequency comparator 136, a third frequency comparator 137 and a digital signal processor (DSP) (or some other control module) 138.

The first PLL frequency divider 132 receives the first PNT source received in the operation 121 and the second PLL frequency divider 133 receives the second PNT source. The first PLL frequency divider divides the frequency of the first source by a value N such that the output of the first PLL frequency divider should be at the common frequency (1MHz in this example). Similarly, the second PLL frequency divider divides the frequency of the second source by a value M such that the output of the second PLL frequency divider should be at the common frequency.

The third PLL divider 134 divides the frequency of internal reference clock by a value P such that the output of the third PLL frequency divider should be at the common frequency. Thus, if both PNT sources are operating at the expected frequencies, the outputs of the frequency dividers 132 to 134 should all be at the common frequency.

The first comparator 135 provides an output that indicates the difference between the outputs of the first and third frequency dividers (i.e. based the first source and the internal reference clock). The second comparator 136 provides an output that indicates the difference between the outputs of the first and second frequency dividers (i.e. based on the first source and the second source). The third comparator 137 provides an output that indicates the difference between the outputs of the second and third frequency dividers (i.e. based on the second source and the internal reference clock).

The outputs of the first to third comparators are provided to the DSP 138. In the DSP 138, the frequency offset between the two PNT sources are considered and evaluated against the accuracy of the PNT frequency sources (thereby implementing operation 123 of the algorithm 120). As an example the frequency estimate tolerance for a 5G source be less than 0.1 ppm and for a GNSS frequency source it will be much more accurate in the range of 0.001 ppb. Both values can be programmed during production of the device or handled as a runtime parameter provided by the PNT source.

In operation 124 of the algorithm 120, a determination is made regarding whether differences in the frequency estimates are within the relevant tolerances. This determination may be based on the output of the second comparator 136 (which indicates the difference between the normalised frequencies of the first and second sources). If so, then the frequency check in the DSP is passed the internal reference clock will be updated in operation 124a accordingly.

If the check in operation 124 fails, the individual frequencies are evaluated against the internal clock reference 131 in operation 125. For example, the first comparator 135 and the third comparator 137 can be used to compare the normalised internal reference clock with the normalised first and second PNT sources respectively. In this way, the local reference (the internal clock) can be used to identify data that is likely to be correct and data that is likely to be faulty in the event that faulty data is identified.

In operation 126, a determination is made regarding whether one or both frequency checks has failed. If only one check has failed, the algorithm 120 moves to operation 127a, where the system will rely on the passing PNT device (e.g. the device having a normalised frequency that is within a tolerance of the internal reference clock) and send an error indication to the failing system. In this scenario, the identified correct data (e.g. position data) can be used as an output. A reset of the source of the identified faulty data may be initiated and/or data from the source of the identified faulty data may be suppressed. If both PNT sources are deemed to be failing (e.g. both sources have normalised frequencies beyond defined tolerances of the normalised internal reference clock), then the algorithm 120 moves to operation 127b. This may mean that both systems are jammed. Actions then need to be taken for both systems.

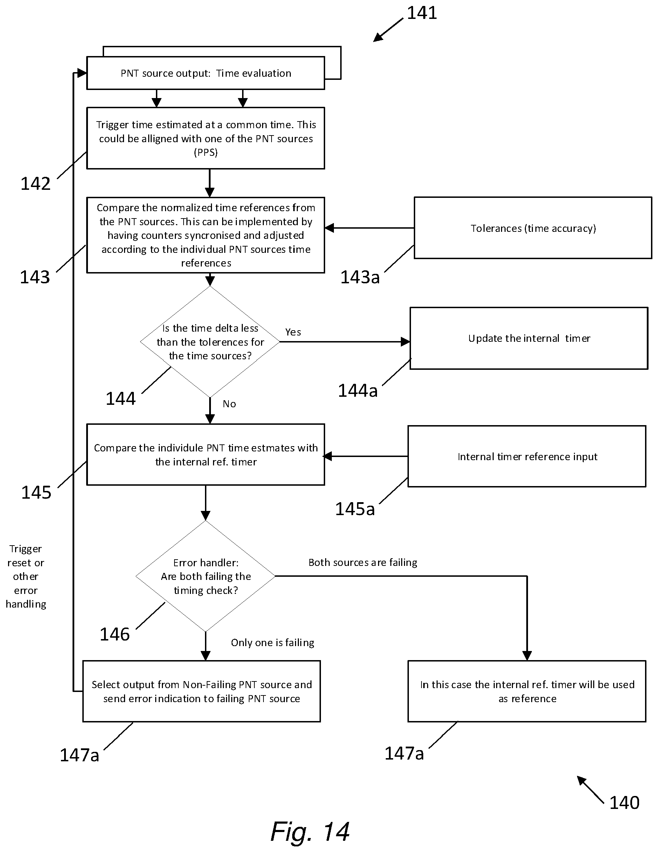

FIG. 14 is a flow chart showing an algorithm, indicated generally by the reference numeral 140, in accordance with an example embodiment. The algorithm 140 provides further information of an example algorithm for comparing timing estimates from two different PNT sources. Of course, the algorithm could readily be extended to compare data from more than two PNT sources.

The algorithm 140 starts at operation 141, where input from two PNT sources for timing evaluation are obtained.

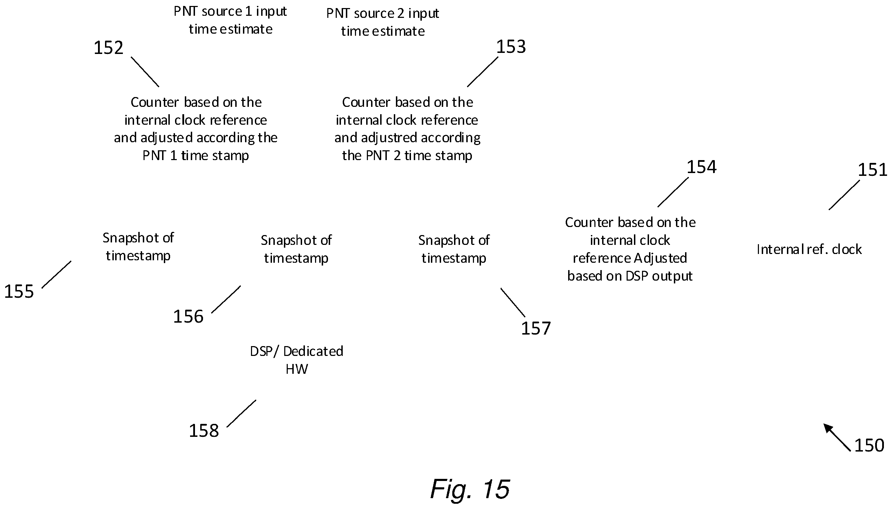

The input time estimates from the PNT sources do not necessarily occur at the same time. For example, pulses from a GNSS PNT source may occurring one time each second, but the reference time update from a 5G PNT source can occur more often (e.g. each ms). This can be handled by having a timer for each PNT source that will be corrected/updated when a new time estimate from the PNT source is ready. Thus, the process can be implemented asynchronously and continuously. A proposal for a hardware implementation is illustrated in FIG. 15.

FIG. 15 is a block diagram of a system, indicated generally by the reference numeral 150, in accordance with an example embodiment.

The system 150 comprises an internal reference clock 151 (similar to the reference clock 131 described above) and receives the first and second PNT signals for which timing comparisons are required. The system further comprises a first counter 152, a second counter 153, a third counter 154, a first timestamp snapshot 155, a second timestamp snapshot comparator 156, a third timestamp snapshot 157 and a digital signal processor (DSP) (or some other control module) 158.

At operation 142 of the algorithm, a trigger time is estimated. This could be aligned with one of the PNT sources.

At operation 143, the timings for the PNT sources are normalised, as necessary. The operation 143 may be implemented using the counters 152 to 154 and the timestamp snapshots 155 to 157. For example, the counter values can be latched to generate the snapshots and compared by the DSP 158. The snapshots of the timing estimates from each source are compared within the expected tolerances for the individual sources (e.g. as provided by system parameters input 143a, such as the system parameters module 74 of the system 70).

In operation 144 of the algorithm 140, a determination is made regarding whether differences in the timings of the signals are within the relevant tolerances. If so, then the timing check in the DSP is passed the internal reference clock will be updated in operation 144a accordingly.

If the check in operation 124 fails, the individual timings are evaluated against the internal clock reference 151 in operation 145. This is also illustrated in FIG. 15, in which the first snapshot 155 and the third snapshot 157 are used to compare the reference clock counter within the counters from the first and second PNT sources. In the DSP 158, the timestamps from the timers are checked and compared to the accuracy of the PNT system. Thus, a local reference (the internal clock) can be used to identify data that is likely to be correct and data that is likely to be faulty in the event that faulty data is identified.

In operation 146, a determination is made regarding whether one or both frequency checks has failed. If only one check has failed, the algorithm 140 moves to operation 147a, where the system will rely on the passing PNT device (e.g. the device having timing information that is within a tolerance of the internal reference clock) and send an error indication to the failing system. In this scenario, the identified correct data (e.g. timing data) can be used as an output. A reset of the source of the identified faulty data may be initiated and/or data from the source of the identified faulty data may be suppressed. If both PNT sources are deemed to be failing, then the algorithm 140 moves to operation 147b. This may mean that both systems are jammed. Actions then need to be taken for both systems.

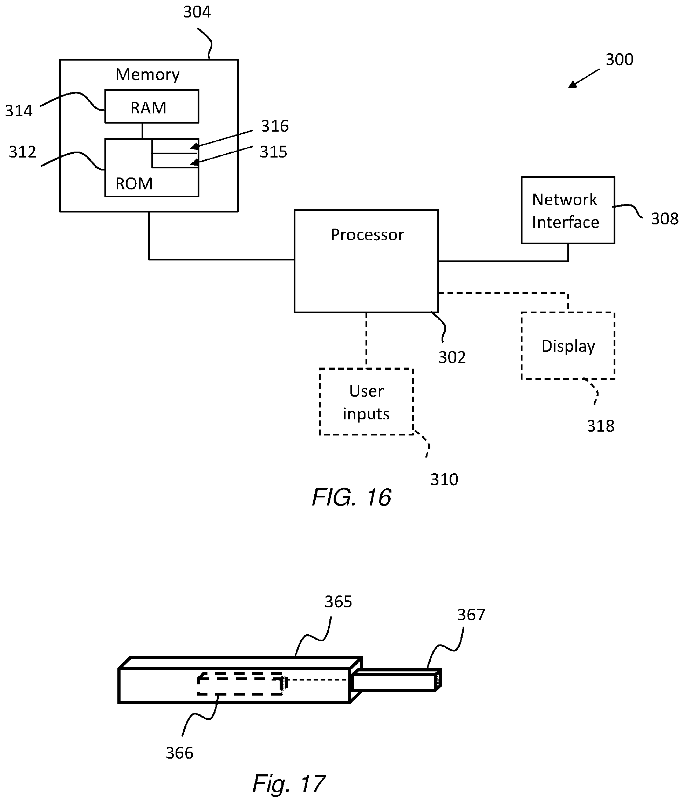

For completeness, FIG. 16 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods and algorithms 40, 60, 80, 90, 120 and 140 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 17 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 4, 6, 8, 9, 12 and 14 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Although various aspects of the invention are set out in the independent claims, other aspects of the invention comprise other combinations of features from the described example embodiments and/or the dependent claims with the features of the independent claims, and not solely the combinations explicitly set out in the claims. It is also noted herein that while the above describes various examples, these descriptions should not be viewed in a limiting sense. Rather, there are several variations and modifications which may be made without departing from the scope of the present invention as defined in the appended claims.

## Claims

1. An apparatus (50) comprising means for performing:
receiving (62) data from each of a plurality of sources, wherein said data includes one or more of timing, positioning and frequency data;
comparing (64) data of corresponding data types received from different sources of the plurality and determining whether the compared data are the same to within an allowed tolerance and, if not, identifying faulty data;
initiating (66) an error handling process in the event that faulty data is identified; and
updating (68) a local reference in the event that non-faulty data is identified,
using the local reference to identify data that is likely to be correct and data that is likely to be faulty in the event that faulty data is identified.

2. An apparatus as claimed in claim 1, wherein each of the plurality of sources is a positioning, navigation and timing component.

3. An apparatus as claimed in claim 1 or claim 2, wherein at least one of the plurality of sources is at least one of a 5G positioning system, a satellite communication system, a low earth orbit communication system, GNSS, GPS, GLONASS, Galileo and BeiDou.

4. An apparatus as claimed in any one of claims 1 to 3, wherein the means for comparing data of corresponding data types comprises means for performing:
comparing position estimates from said difference sources of the plurality.

5. An apparatus as claimed in any one of the preceding claims, wherein the means for comparing data of corresponding data types comprises means for performing:
comparing timing estimates from said difference sources of the plurality.

6. An apparatus as claimed in any one of the preceding claims, wherein the means for comparing data of corresponding data types comprises means for performing:
normalising frequency estimates from said difference sources of the plurality; and
comparing the normalised frequency estimates.

7. An apparatus as claimed in any of the preceding claims, further comprising:
using the identified correct data as an output.

8. An apparatus as claimed in any of the preceding claims, further comprising means for performing:
initiating a reset of the source of the identified faulty data.

9. An apparatus as claimed in any one of the preceding claims, further comprising means for performing:
suppressing data from the source of the identified faulty data.

10. An apparatus as claimed in any one of the preceding claims, further comprising means for performing:
generating output data based on a combination of corresponding data from sources of data for which no faulty data has been identified.

11. An apparatus as claimed in any one of the preceding claims, wherein the data received from each of the plurality of sources is received at a user equipment of a mobile communication system.

12. A method (60) comprising:
receiving (62) data from each of a plurality of sources, wherein said data includes one or more of timing, positioning and frequency data;
comparing (64) data of corresponding data types received from different sources of the plurality and determining whether the compared data are the same to within an allowed tolerance and, if not, identifying faulty data;
initiating (66) an error handling process, in the event that faulty data is identified;
updating (68) a local reference in the event that non-faulty data is identified;
and using the local reference to identify data that is likely to be correct and data that is likely to be faulty in the event that faulty data is identified.

13. A method as claimed in claim 12, wherein comparing data of corresponding data types comprises one or more of:
comparing position estimates from said difference sources of the plurality;
comparing timing estimates from said difference sources of the plurality; and
normalising frequency estimates from said difference sources of the plurality and comparing the normalised frequency estimates.

14. A computer program comprising instructions for causing an apparatus to perform at least the following:
receive (62) data from each of a plurality of sources, wherein said data includes one or more of timing, positioning and frequency data;
compare (64) data of corresponding data types received from different sources of the plurality and determine whether the compared data are the same to within an allowed tolerance and, if not, identifying faulty data;
initiate (66) an error handling process in the event that faulty data is identified;
update (68) a local reference in the event that non-faulty data is identified;
and use the local reference to identify data that is likely to be correct and data that is likely to be faulty in the event that faulty data is identified.

## Patentansprüche

1. Vorrichtung (50), die Mittel umfasst zum Durchführen der folgenden Vorgänge:
Empfangen (62) von Daten von jeder einer Vielzahl von Quellen, wobei die Daten eine oder mehrere von Synchronisations-, Positionierungs- und Frequenzdaten umfassen;
Vergleichen (64) von Daten entsprechender Datentypen, die von verschiedenen Quellen der Vielzahl empfangen wurden, und Bestimmen, ob die verglichenen Daten innerhalb einer zulässigen Toleranz gleich sind, und, falls nicht, Identifizieren fehlerhafter Daten;
Einleiten (66) eines Fehlerbehandlungsprozesses für den Fall, dass fehlerhafte Daten identifiziert werden; und
Aktualisieren (68) einer lokalen Referenz für den Fall, dass nicht fehlerhafte Daten identifiziert werden,
Verwenden der lokalen Referenz zum Identifizieren von Daten, die wahrscheinlich korrekt sind, und von Daten, die wahrscheinlich fehlerhaft sind, für den Fall, dass fehlerhafte Daten identifiziert werden.

2. Vorrichtung nach Anspruch 1, wobei jede der Vielzahl von Quellen eine Positionierungs-, Navigations- und Synchronisationskomponente ist.

3. Vorrichtung nach Anspruch 1 oder Anspruch 2, wobei mindestens eine der Vielzahl von Quellen ein 5G-Positionierungssystem, ein Satellitenkommunikationssystem, ein Kommunikationssystem mit niedrigem Erdorbit, ein GNSS, ein GPS, ein GLONASS, ein Galileo und ein BeiDou ist.

4. Vorrichtung nach einem der Ansprüche 1 bis 3, wobei die Mittel zum Vergleichen von Daten entsprechender Datentypen Mittel zum Durchführen des folgenden Vorgangs umfassen:
Vergleichen von Positionsschätzungen von den Differenzquellen der Vielzahl.

5. Vorrichtung nach einem der vorhergehenden Ansprüche, wobei die Mittel zum Vergleichen von Daten entsprechender Datentypen Mittel zum Durchführen des folgenden Vorgangs umfassen:
Vergleichen von Synchronisationsschätzungen von den Differenzquellen der Vielzahl.

6. Vorrichtung nach einem der vorhergehenden Ansprüche, wobei die Mittel zum Vergleichen von Daten entsprechender Datentypen Mittel zum Durchführen der folgenden Vorgänge umfassen:
Normalisieren von Frequenzschätzungen von den Differenzquellen der Vielzahl; und
Vergleichen der normalisierten Frequenzschätzungen.

7. Vorrichtung nach einem der vorhergehenden Ansprüche, ferner umfassend:
Verwenden der identifizierten korrekten Daten als Ausgabe.

8. Vorrichtung nach einem der vorhergehenden Ansprüche, ferner umfassend Mittel zum Durchführen des folgenden Vorgangs:
Einleiten eines Zurücksetzens der Quelle der identifizierten fehlerhaften Daten.

9. Vorrichtung nach einem der vorhergehenden Ansprüche, ferner umfassend Mittel zum Durchführen des folgenden Vorgangs:
Unterdrücken von Daten von der Quelle der identifizierten fehlerhaften Daten.

10. Vorrichtung nach einem der vorhergehenden Ansprüche, ferner umfassend Mittel zum Durchführen des folgenden Vorgangs:
Erzeugen von Ausgabedaten auf der Grundlage einer Kombination von entsprechenden Daten aus Datenquellen, für die keine fehlerhaften Daten identifiziert wurden.

11. Vorrichtung nach einem der vorhergehenden Ansprüche, wobei die von jeder der Vielzahl von Quellen empfangenen Daten an einem Benutzergerät eines Mobilkommunikationssystems empfangen werden.

12. Verfahren (60), umfassend die folgenden Schritte:
Empfangen (62) von Daten von jeder einer Vielzahl von Quellen, wobei die Daten eine oder mehrere von Synchronisations-, Positionierungs- und Frequenzdaten umfassen;
Vergleichen (64) von Daten entsprechender Datentypen, die von verschiedenen Quellen der Vielzahl empfangen wurden, und Bestimmen, ob die verglichenen Daten innerhalb einer zulässigen Toleranz gleich sind, und, falls nicht, Identifizieren fehlerhafter Daten;
Einleiten (66) eines Fehlerbehandlungsprozesses für den Fall, dass fehlerhafte Daten identifiziert werden;
Aktualisieren (68) einer lokalen Referenz für den Fall, dass nicht fehlerhafte Daten identifiziert werden;
und Verwenden der lokalen Referenz zum Identifizieren von Daten, die wahrscheinlich korrekt sind, und von Daten, die wahrscheinlich fehlerhaft sind, für den Fall, dass fehlerhafte Daten identifiziert werden.

13. Verfahren nach Anspruch 12, wobei das Vergleichen von Daten entsprechender Datentypen einen oder mehrere der folgenden Vorgänge umfasst:
Vergleichen von Positionsschätzungen von den Differenzquellen der Vielzahl;
Vergleichen von Synchronisationsschätzungen von den Differenzquellen der Vielzahl; und
Normalisieren von Frequenzschätzungen von den Differenzquellen der Vielzahl und Vergleichen der normalisierten Frequenzschätzungen.

14. Computerprogramm, das Anweisungen umfasst, um eine Vorrichtung zu veranlassen, mindestens die folgenden Vorgänge durchzuführen:
Empfangen (62) von Daten von jeder einer Vielzahl von Quellen, wobei die Daten eine oder mehrere von Synchronisations-, Positionierungs- und Frequenzdaten umfassen;
Vergleichen (64) von Daten entsprechender Datentypen, die von verschiedenen Quellen der Vielzahl empfangen wurden, und Bestimmen, ob die verglichenen Daten innerhalb einer zulässigen Toleranz gleich sind, und, falls nicht, Identifizieren fehlerhafter Daten;
Einleiten (66) eines Fehlerbehandlungsprozesses für den Fall, dass fehlerhafte Daten identifiziert werden;
Aktualisieren (68) einer lokalen Referenz für den Fall, dass nicht fehlerhafte Daten identifiziert werden;
und Verwenden der lokalen Referenz zum Identifizieren von Daten, die wahrscheinlich korrekt sind, und von Daten, die wahrscheinlich fehlerhaft sind, für den Fall, dass fehlerhafte Daten identifiziert werden.

## Revendications

1. Appareil (50) comprenant des moyens pour effectuer les opérations suivantes :
recevoir (62) des données provenant de chacune d'une pluralité de sources, dans lequel lesdites données comprennent une ou plusieurs données de synchronisation, de positionnement et de fréquence ;
comparer (64) des données de types de données correspondants reçues de différentes sources de la pluralité et déterminer si les données comparées sont identiques à une tolérance autorisée près et, dans le cas contraire, identifier des données défectueuses ;
initier (66) un processus de traitement d'erreur dans le cas où des données défectueuses sont identifiées ; et
mettre à jour (68) une référence locale dans le cas où des données non défectueuses sont identifiées,
utiliser la référence locale pour identifier des données qui sont probablement correctes et des données qui sont probablement défectueuses dans le cas où des données défectueuses sont identifiées.

2. Appareil selon la revendication 1, dans lequel chacune de la pluralité de sources est un composant de positionnement, de navigation et de synchronisation.

3. Appareil selon la revendication 1 ou la revendication 2, dans lequel au moins l'une de la pluralité de sources est un système de positionnement 5G, un système de communication par satellite, un système de communication par satellite en orbite terrestre basse, un GNSS, un GPS, un GLONASS, un Galileo et un BeiDou.

4. Appareil selon l'une quelconque des revendications 1 à 3, dans lequel les moyens pour comparer des données de types de données correspondants comprennent des moyens pour effectuer l'opération suivante :
comparer des estimations de position provenant desdites sources de différence de la pluralité.

5. Appareil selon l'une quelconque des revendications précédentes, dans lequel les moyens pour comparer des données de types de données correspondants comprennent des moyens pour effectuer l'opération suivante :
comparer des estimations de synchronisation provenant desdites sources de différence de la pluralité.

6. Appareil selon l'une quelconque des revendications précédentes, dans lequel les moyens pour comparer des données de types de données correspondants comprennent des moyens pour effectuer les opérations suivantes :
normaliser des estimations de fréquence provenant desdites sources de différence de la pluralité ; et
comparer les estimations de fréquence normalisées.

7. Appareil selon l'une quelconque des revendications précédentes, comprenant en outre :
utiliser les données correctes identifiées en tant que sortie.

8. Appareil selon l'une quelconque des revendications précédentes, comprenant en outre des moyens pour effectuer l'opération suivante :
initier une réinitialisation de la source des données défectueuses identifiées.

9. Appareil selon l'une quelconque des revendications précédentes, comprenant en outre des moyens pour effectuer l'opération suivante :
supprimer des données provenant de la source des données défectueuses identifiées.

10. Appareil selon l'une quelconque des revendications précédentes, comprenant en outre des moyens pour effectuer l'opération suivante :
générer des données de sortie sur la base d'une combinaison de données correspondantes provenant de sources de données pour lesquelles aucune donnée défectueuse n'a été identifiée.

11. Appareil selon l'une quelconque des revendications précédentes, dans lequel les données reçues de chacune de la pluralité de sources sont reçues au niveau d'un équipement d'utilisateur d'un système de communication mobile.

12. Procédé (60) comprenant les étapes suivantes :
recevoir (62) des données provenant de chacune d'une pluralité de sources, dans lequel lesdites données comprennent une ou plusieurs données de synchronisation, de positionnement et de fréquence ;
comparer (64) des données de types de données correspondants reçues de différentes sources de la pluralité et déterminer si les données comparées sont identiques à une tolérance autorisée près et, dans le cas contraire, identifier des données défectueuses ;
initier (66) un processus de traitement d'erreur dans le cas où des données défectueuses sont identifiées ;
mettre à jour (68) une référence locale dans le cas où des données non défectueuses sont identifiées ;
et utiliser la référence locale pour identifier des données qui sont probablement correctes et des données qui sont probablement défectueuses dans le cas où des données défectueuses sont identifiées.

13. Procédé selon la revendication 12, dans lequel la comparaison de données de types de données correspondants comprend une ou plusieurs des opérations suivantes :
comparer des estimations de position provenant desdites sources de différence de la pluralité ;
comparer des estimations de synchronisation provenant desdites sources de différence de la pluralité ; et
normaliser des estimations de fréquence provenant desdites sources de différence de la pluralité et comparer les estimations de fréquence normalisées.

14. Programme informatique comprenant des instructions pour amener un appareil à effectuer au moins les opérations suivantes :
recevoir (62) des données provenant de chacune d'une pluralité de sources, dans lequel lesdites données comprennent une ou plusieurs données de synchronisation, de positionnement et de fréquence ;
comparer (64) des données de types de données correspondants reçues de différentes sources de la pluralité et déterminer si les données comparées sont identiques à une tolérance autorisée près et, dans le cas contraire, identifier des données défectueuses ;
initier (66) un processus de traitement d'erreur dans le cas où des données défectueuses sont identifiées ;
mettre à jour (68) une référence locale dans le cas où des données non défectueuses sont identifiées ;
et utiliser la référence locale pour identifier des données qui sont probablement correctes et des données qui sont probablement défectueuses dans le cas où des données défectueuses sont identifiées.
